# EUROPÄISCHE PATENTANMELDUNG

(11) **EP 2 369 323 A1**
(43) Veröffentlichungstag der Anmeldung: **28.09.2011**
(21) Anmeldenummer: 10002948.7
(22) Anmeldetag: 19.03.2010
(51) Int. Cl.: G01N 21/55

(54) **Verfahren und Messgerät zur Bestimmung der Retroreflektivität einer retroreflektierenden Oberfläche**

(71) Anmelder: Mechatronic Traffic GmbH, 64295 Darmstadt (DE)
(72) Erfinder: Die Erfindernennung liegt noch nicht vor
(74) Vertreter: Manitz, Finsterwald & Partner GbR

(57) **Zusammenfassung**

Die Erfindung betrifft ein Verfahren zur Bestimmung der Retroreflektivität einer retroreflektierenden Oberfläche in einer vorbestimmten Richtung. Messlicht wird in Richtung der Oberfläche gesendet, deren Retroreflektivität gemessen werden soll. Es wird die Richtung ausgewählt, in der die Retroreflektivität gemessen werden soll. Ein lichtempfindliches Element aus einer Anordnung von lichtempfindlichen Elementen, das in der Richtung angeordnet ist, in der die Retroreflektivität gemessen werden soll, oder ein Teilbereich einer Anordnung von lichtempfindlichen Elementen, der in der Richtung angeordnet ist, in der die Retroreflektivität gemessen werden soll, und der nicht alle lichtempfindlichen Elemente der Anordnung umfasst, wird ausgewählt. Das Signal des ausgewählten lichtempfindlichen Elementes oder der lichtempfindlichen Elemente des ausgewählten Teilbereiches wird ausgewertet, um die Intensität des auf dieses lichtempfindliche Element oder den Teilbereich fallenden retroreflektierten Lichtes zu bestimmen. Die Erfindung betrifft weiterhin ein Messgerät, mit dem das erfindungsgemäße Verfahren durchgeführt werden kann.

## Beschreibung

Die Erfindung betrifft ein Verfahren zur Bestimmung der Retroreflektivität einer retroreflektierenden Oberfläche, insbesondere der Oberflächenschicht eines Verkehrszeichens.

Verkehrszeichen sind heutzutage in der Regel retroreflektiv ausgestaltet. Im Unterschied zur typischen Reflexion an Spiegeln handelt es sich bei der Retroreflexion um eine Reflexion, bei der das ausgesendete Licht einer Lichtquelle unter nahezu dem gleichen Winkel wieder in die Richtung der Lichtquelle zurückreflektiert wird. Auf diese Weise wird sichergestellt, dass das Licht von einer Fahrzeugbeleuchtung, das von einem Verkehrszeichen reflektiert wird, im Wesentlichen unter fast demselben Winkel reflektiert wird und so nahezu vollständig in Richtung des Fahrzeuges und insbesondere des Fahrzeugführers reflektiert wird. Dies kann durch geeignete optische Elemente an den Verkehrszeichen erreicht werden, zum Beispiel Tripelspiegel oder Tripelprismen.

An die lichttechnischen Eigenschaften der Verkehrszeichen werden aus Sicherheitsgründen hohe Anforderungen gestellt. Außerdem sind die Anforderungen in einschlägigen Normen festgelegt. Dabei sind sowohl die lichttechnischen Anforderungen an die Verkehrszeichen selbst als auch Vorgaben für das Messprinzip und die Messgeometrie zur Überprüfung der Anforderungen an dem Verkehrszeichen oder dem Material zur Verwendung in einem Verkehrszeichen festgelegt.

Die Anforderungen sind zum Beispiel für Europa in der Norm DIN/EN 67520 und für die USA in der Norm ASTM E 1709 festgelegt. Zur Überprüfung, ob diese Normen erfüllt werden, werden Messgeräte zur Messung der Retroreflektivität, sogenannte Retroreflektometer, eingesetzt. Bekannte Retroreflektometer verwenden Glühlampen als Lichtquelle zur Anleuchtung des Prüflings. Der Prüfling ist dabei zum Beispiel die Folie, die als Oberfläche eines Verkehrsschildes zum Einsatz kommen soll. Das vom Prüfling reflektierte Licht wird mit einem Fotosensor erfasst, der mittels entsprechend ausgewählter Spezialfilter die Charakteristik des menschlichen Auges nachbildet.

Die unterschiedlichen Messgeometrien der verschiedenen Normen können durch die entsprechende räumliche Anordnung von Lichtquelle und Empfänger simuliert werden und sind somit für jedes Gerät individuell festgelegt. Um die regional unterschiedlichen Messgeometrien der jeweiligen Normen zu realisieren, müssen dementsprechend verschiedene Geräte vorliegen.

Aufgrund technischer Weiterentwicklungen in der Automobilindustrie und sich permanent ändernder Verkehrsinfrastrukturen werden die normativen Anforderungen für Verkehrszeichen von Zeit zu Zeit geändert. In einem solchen Fall müssen die entsprechenden Messgeräte durch Änderungen ihrer Messgeometrie angepasst werden, wodurch entsprechende Kosten entstehen.

Andere bekannte Ausgestaltungen messen die Intensitätsverteilung des von einem Verkehrsschild reflektierten Lichtes mit Hilfe eines Felds lichtempfindlicher Elemente um daraus auf die Retroreflektivität in unterschiedlichen Richtungen zu schließen. So wird bei einem in US 6,166,813 beschriebenen Verfahren zur Messung der Retroreflektivität das Licht einer Glühlampe auf eine Oberfläche gerichtet, deren Retroreflektivität gemessen werden soll. Zur Bestimmung der Retroreflektivität wird eine Intensitätsverteilung des retroreflektierten Lichtes über ein Sensorarray ausgewertet.

Es ist die Aufgabe der vorliegenden Erfindung, ein Verfahren beziehungsweise ein Messgerät anzugeben, mit deren Hilfe zum einen eine sehr einfache, schnelle und verlässliche Bestimmung der Retroreflektivität in einem vorbestimmten Winkel möglich ist, und die zum anderen auf einfache und kostengünstige Weise an unterschiedliche Anforderungen, zum Beispiel unterschiedliche Normen angepasst werden können.

Die Aufgabe wird mit einem Messverfahren mit den Merkmalen des Anspruches 1 bzw. ein Messgerät mit den Merkmalen des Anspruches 9 gelöst. Unteransprüche sind auf bevorzugte Ausgestaltungen und Ausführungsformen gerichtet.

Bei einem erfindungsgemäßen Verfahren zur Bestimmung der Retroreflektivität einer retroreflektierenden Oberfläche in einer vorbestimmten Richtung wird Messlicht in Richtung der retroreflektierenden Oberfläche gesendet, deren Retroreflektivität gemessen werden soll.

Es wird im Vorhinein ein Teilbereich einer Anordnung aus lichtempfindlichen Elementen ausgewählt, der derart angeordnet ist, dass er von Licht getroffen wird, das von der retroreflektierenden Oberfläche in der vorbestimmten Richtung retroreflektiert wird, in der die Retroreflektivität gemessen werden soll. Nur die Signale der lichtempfindlichen Elemente dieses ausgewählten Teilbereiches werden ausgelesen und verwendet, um die Intensität des auf diesen Teilbereich fallenden retroreflektierten Lichtes zu bestimmen.

Es werden also nicht alle lichtempfindlichen Elemente der Anordnung aus lichtempfindlichen Elementen ausgelesen.

Als "Richtung" des retroreflektierten Lichtes wird dabei die Abweichung von der Richtung des einfallenden Strahles bezeichnet. Eine Ablenkung des reflektierten Lichtes zum Beispiel mit Hilfe eines spiegelnden Elementes - beispielsweise aus messtechnischen Gründen -, die auf das gesamte reflektierte Licht gleichermaßen wirkt, wird dabei nicht als Änderung der "Richtung" angesehen.

Der Teilbereich der Anordnung lichtempfindlicher Elemente kann beispielsweise einige wenige benachbarte Elemente, zum Beispiel zwei oder vier, umfassen. Besonders vorteilhaft ist eine Ausgestaltung, bei der nur genau ein einzelnes lichtempfindliches Element ausgewählt wird, dessen Signal ausgelesen wird und zur Bestimmung der Intensität verwendet wird, die auf das lichtempfindliche Element fällt.

Erfindungsgemäß wird also keine Intensitätsverteilung eines retroreflektierten Lichtes bestimmt. Stattdessen wird erfindungsgemäß die Intensität eines retroreflektierten Lichtstrahles in einem ganz definierten Punkt ausgewertet, das heißt nur die Intensität desjenigen retroreflektierten Lichtes, das in der gewünschten Richtung empfangen wird. Dies lässt sich insbesondere mit Hilfe eines entsprechend dimensionierten CCD-Empfängers realisieren, bei dem nur eine ganze bestimmte CCD-Zelle ausgelesen wird, die in genau derjenigen Richtung liegt, in der die Retroreflektivität gemessen werden soll. Alternativ werden nur sehr wenige, zum Beispiel zwei oder vier, benachbarte CCD-Zellen, ausgelesen.

Grundsätzlich ist das erfindungsgemäße Verfahren allgemein zur Bestimmung der Retroreflektivität von retroreflektierenden Materialien geeignet. Besonders vorteilhaft ist das erfindungsgemäße Verfahren für die Bestimmung der Retroreflektivität der Oberflächenschicht von Verkehrszeichen, da hier die Auswertung der Intensität des retroreflektierten Lichtes in nur einer gewünschten Richtung, wie sie zum Beispiel von einer Norm gefordert wird, auf einfache und kostengünstige Weise realisiert werden kann.

Dies wird im Folgenden am Beispiel der Messung der Retroreflektivität der Oberfläche eines Verkehrszeichens erläutert. Das erfindungsgemäße Verfahren ermöglicht die Messung der Retroreflektivität für die Oberflächen von Verkehrszeichen unter verschiedenen Messgeometrien. So kann zum Beispiel ein definierter Beobachtungswinkel von 0,2° eingestellt werden (entsprechend zum Beispiel der ASTM-Norm), in dem die Retroreflektivität gemessen werden soll. Dazu wird die entsprechende CCD-Zelle ausgewählt, deren Lage genau einem solchen Beobachtungswinkel entspricht. Soll unter einer anderen Norm oder einer neu festgelegten Norm gemessen werden (zum Beispiel unter einem Beobachtungswinkel von 0,33 gemäß einer DIN-Norm), so muss nur diejenige CCD-Zelle ausgewählt werden, die genau diesem Beobachtungswinkel entspricht. Umfangreiche Abänderungen der Hardware und der die Messgeometrie festlegenden Komponenten des Messgerätes sind nicht notwendig.

Ein erfindungsgemäßes Messgerät zur Messung der Retroreflektivität einer retroreflektierenden Oberfläche in einer vorbestimmten Richtung weist eine Lichtquelle zum Aussenden von Messlicht und eine Optik zur Lenkung dieses Messlichtes auf die Oberfläche, deren Retroreflektivität gemessen werden soll, auf. In dem erwarteten Strahlengang des retroreflektierten Lichtes ist eine Anordnung von lichtempfindlichen Elementen vorgesehen.

Außerdem weist das erfindungsgemäße Messgerät eine Auswerteeinheit auf, die zum Auswählen eines Teilbereiches der Anordnung von lichtempfindlichen Elementen ausgestaltet ist, der derart angeordnet ist, dass er von Licht getroffen wird, das in der vorbestimmten Richtung retroreflektiert wird, in der die Retroreflektivität gemessen werden soll. Dieser Teilbereich umfasst nicht alle lichtempfindlichen Elemente der Anordnung. Die Auswerteeinheit ist außerdem dazu ausgestaltet, nur die Signale der lichtempfindlichen Elemente des ausgewählten Teilbereiches auszulesen und zur Bestimmung der Intensität des auf den ausgewählten Teilbereich fallenden retroreflektierten Lichtes zu verwenden. Eine bevorzugte Ausgestaltung sieht eine Auswerteeinheit vor, die zum Auswählen nur eines lichtempfindlichen Elementes der Anordnung ausgestaltet ist, das derart angeordnet ist, dass es von Licht getroffen wird, das in der vorbestimmten Richtung retroreflektiert wird. Die Auswerteeinheit dieser bevorzugten Ausführungsform des erfindungsgemäßen Messgerätes ist ausgestaltet, nur das Signal des ausgewählten lichtempfindlichen Elementes auszulesen und zur Bestimmung der Intensität des auf das ausgewählte lichtempfindliche Element fallenden retroreflektierten Lichtes zu verwenden.

Mit Hilfe der Auswerteeinheit ist es also möglich, genau diejenige Lichtmenge zu messen, die auf ein einzelnes ausgewähltes lichtempfindliches Element oder die lichtempfindlichen Elemente eines ausgewählten Teilbereiches fällt. Durch entsprechende Auswahl desjenigen lichtempfindlichen Elementes, das in derjenigen Richtung angeordnet ist, in der die Retroreflektivität gemessen werden soll, oder eines entsprechenden Teilbereiches, ist der gewünschte Beobachtungswinkel genau vorgebbar. Durch einfache Ansteuerung eines anderen lichtempfindlichen Elementes der Anordnung lichtempfindlicher Elemente kann ein anderer Winkel gemessen werden, um zum Beispiel die Anforderungen an die Messgeometrie einer anderen Norm zu erfüllen.

Ebenso wie das erfindungsgemäße Verfahren eignet sich das erfindungsgemäße Messgerät grundsätzlich allgemein zur Bestimmung der Retroreflektivität retroreflektierender Materialien. Besonders geeignet ist das erfindungsgemäße Messgerät aus denselben Gründen wie das erfindungsgemäße Verfahren zur Bestimmung der Retroreflektivität der Oberflächenschicht eines Verkehrszeichens.

Die Anordnung von lichtempfindlichen Elementen kann zum Beispiel eine CCD-Anordnung umfassen, wobei je nach Messgeometrie genau diejenige CCD-Zelle (beziehungsweise die CCD-Zellen des ausgewählten Teilbereichs) angesprochen werden kann, die in der gewünschten Beobachtungsgeometrie liegt.

Eine einfache Ausgestaltung sieht vor, dass die Anordnung der lichtempfindlichen Elemente eindimensional ist, also zum Beispiel durch eine eindimensionale CCD-Zeile gebildet wird. Mit Hilfe dieser Zeile lässt sich auf einfache und kostengünstige Weise erreichen, dass unterschiedliche Winkel in einer Raumrichtung eingestellt werden können.

Um zum Beispiel die Messgeometrie unterschiedlicher Normen zur Bestimmung der Retroreflektivität von Verkehrszeichen erfüllen zu können, ist es vorteilhaft, wenn die Anordnung der lichtempfindlichen Elemente derart ist, dass sie einem Winkelbereich des retroreflektierten Lichtes von wenigstens zwei Winkelgrad entspricht. Innerhalb dieses Winkelbereiches können dann unterschiedliche Retroreflektivitätswinkel eingestellt werden, die den unterschiedlichen Messnormen entsprechen.

Bei einer bevorzugten Ausgestaltung des erfindungsgemäßen Verfahrens wird zur Erzeugung des Messlichtes eine Leuchtdiode (LED) verwendet. Eine besondere Ausführungsform des erfindungsgemäßen Messgerätes weist dementsprechend eine Leuchtdiode (LED) als Lichtquelle auf. Bevorzugt ist eine sogenannte "warm-white"-LED.

Eine LED hat im Vergleich zu den bisher eingesetzten Glühlampen einen geringen Stromverbrauch und altert sehr viel langsamer. Eine Änderung der lichttechnischen Eigenschaften, die Einfluss auf die Messgenauigkeit hätte, wird daher signifikant verringert. Durch die geringere Alterung der Leuchtdioden sind auch die Wartungskosten und Ausfallzeiten eines entsprechenden Messgerätes deutlich geringer, die entstehen können, wenn es zur Auswechslung der Lichtquelle kommen muss. Schließlich erreichen Leuchtdioden sehr viel schneller als Glühlampen ihren stabilen Beleuchtungszustand, in dem sie Licht mit definierter Farbtemperatur aussenden.

Bei einer vorteilhaften Ausgestaltung des erfindungsgemäßen Verfahrens wird die Betriebstemperatur der Leuchtdiode derart festgelegt, dass sie ein gewünschtes Emissionsspektrum aufweist. Durch die Auswahl der Temperatur kann auf diese Weise sehr einfach das Emissionsspektrum eingestellt werden, das zum Beispiel von einer Norm bei der Messung der Retroreflektivität von Verkehrszeichen gefordert wird. Grundsätzlich ist es aber auch möglich, dass ohne aktive Temperatureinstellung gearbeitet wird, wenn dies den Anforderungen genügt.

Eine entsprechende Ausführungsform des erfindungsgemäßen Messgerätes weist eine Temperiervorrichtung für die als Lichtquelle verwendete Leuchtdiode auf, die zur Kühlung und/oder zur Erwärmung der Leuchtdiode dient um die entsprechende Betriebstemperatur einstellen zu können. Eine einfache Ausgestaltung sieht hierzu die Verwendung eines Peltier-Elementes vor.

Eine weitere vorteilhafte Ausgestaltung des erfindungsgemäßen Verfahrens sieht vor, dass ein Teil des Lichtes, das auf die zu vermessende Oberfläche gesendet wird, abgezweigt wird und zur Regelung der Beleuchtungsstärke der Lichtquelle eingesetzt wird, die zur Erzeugung des Messlichtes verwendet wird.

Eine entsprechende Ausführungsform des erfindungsgemäßen Messgerätes sieht dazu einen teildurchlässigen Spiegel im Strahlengang des auf die Oberfläche fallenden Lichtes, deren Retroreflektivität gemessen werden soll, vor. Außerdem ist ein Referenzlichtempfänger im Strahlengang desjenigen Lichtes angeordnet, das ausgehend von diesem teildurchlässigen Spiegel nicht auf die Oberfläche fällt, deren Retroreflektivität gemessen werden soll.

Bei einer Ausgestaltung des erfindungsgemäßen Verfahrens wird ein vorbestimmter Winkel zwischen dem einfallenden Messlicht und der Oberfläche, deren Retroreflektivität gemessen werden soll, eingestellt. Dazu wird zwischen die Oberfläche, die vermessen werden soll, und einer Referenzfläche, die vorzugsweise senkrecht zum Strahlengang des Messlichtes ist, eine lichtdurchlässige Winkelplatte eingesetzt. Auf diese Weise wird erreicht, dass die zu vermessende Oberfläche nicht senkrecht zum einfallenden Messlicht ist. Durch Auswahl einer entsprechenden Winkelplatte können unterschiedliche Anleuchtwinkel voreingestellt werden. Die lichtdurchlässige Winkelplatte kann zum Beispiel durch einen entsprechend angeschrägten Tubus gebildet sein.

Die Winkelplatte kann beispielsweise Magnete aufweisen, die sie zum Beispiel an einem metallischen Gehäuse halten können. Außerdem kann vorgesehen sein, dass die Winkelplatte ein Informationselement umfasst, das Identifikationsinformation enthält, die von einem entsprechenden Sensor im Gehäuse ausgelesen werden kann und bei der Auswertung berücksichtigt werden kann. Auf diese Weise steht der mit der Winkelplatte eingestellte Winkel bei der Auswertung zur Verfügung. Das Informationselement kann zum Beispiel ein Datenchip oder ein Transponderelement sein. Eine einfache Lösung sieht ein widerstandskodiertes Element vor, bei dem der Typ der Winkelplatte über den Widerstandswert erkannt werden kann.

Die Winkelplatte kann dabei Winkel in unterschiedlichen Raumrichtungen zur Verfügung stellen. Auf diese Weise kann mit einer entsprechend ausgestalteten Winkelplatte auch die Retroreflektivität in unterschiedlichen Raumrichtungen bestimmt werden, die nicht in der Einfallsebene liegen.

Der durch die Winkelplatte festgelegte Anleuchtwinkel muss also nicht notwendigerweise in derselben Ebene liegen, wie der Winkel, der die Richtung festlegt, in der die Retroreflektivität gemessen werden soll. Anders ausgedrückt, muss die von der Flächennormalen der Oberfläche, deren Retroreflektivität gemessen werden soll, und dem Anleuchtwinkel aufgespannte Ebene nicht identisch zu der Ebene sein, die von der Flächennormalen der Oberfläche, deren Retroreflektivität gemessen werden soll, und dem Winkel, der die Richtung festlegt, in der die Retroreflektivität gemessen werden soll, aufgespannt wird.

Zur Erzeugung eines zum Beispiel in einer Norm geforderten Lichtes kann im Strahlengang des Messlichtes ein Filter vorgesehen sein, der ein entsprechendes Spektrum erzeugt.

Im Folgenden wird eine Ausgestaltung des erfindungsgemäßen Verfahrens bzw. eine Ausführungsform des erfindungsgemäßen Messgerätes anhand der anliegenden Figuren im Detail erläutert. In nur schematischer und nicht notwendiger Weise maßstabsgetreuer Darstellung zeigen
- Fig. 1: eine Ausführungsform eines erfindungsgemäßen Messgerätes,
- Fig. 2: eine erläuternde Darstellung für das Verständnis der vorliegenden Geometrien, und
- Fig. 3: eine erläuternde Darstellung für die Messgeometrien unterschiedlicher Normen bei der Vermessung von der Reflektivität von Verkehrszeichen.

Die Erfindung wird anhand von Beispielen erläutert, die die Messung der Retroreflektivität der Oberflächenschicht eines Verkehrszeichens betreffen.

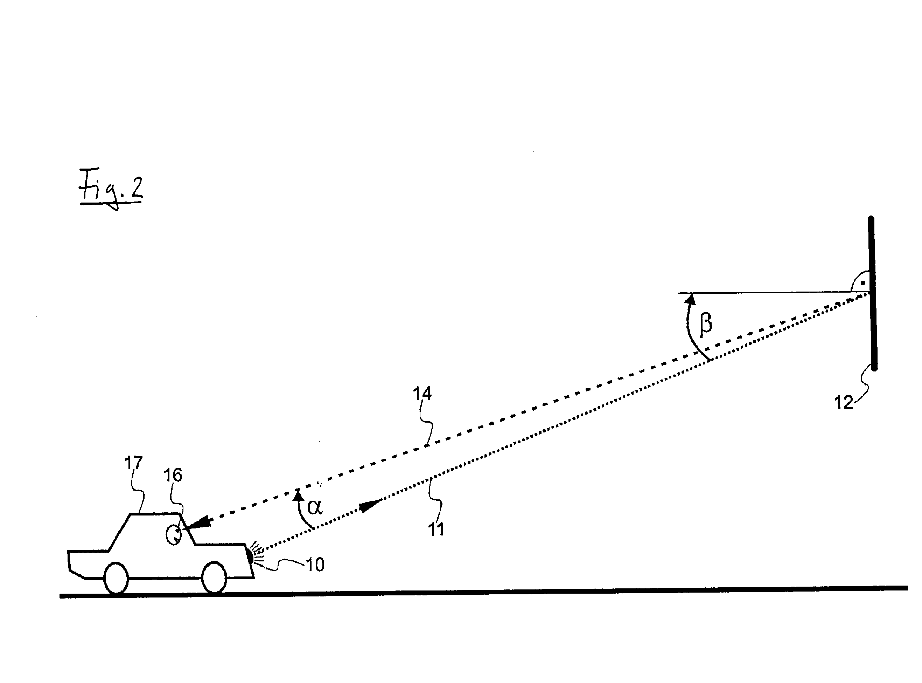

Fig. 2 zeigt in schematischer Darstellung ein Verkehrszeichen 12 mit retroreflektierender Oberfläche. Das Licht 11 eines Scheinwerfers 10 eines Fahrzeuges 17 fällt auf die Oberfläche des Verkehrszeichen 12. β gibt ein Winkelmaß für die Einfallsrichtung.

Das auf das Verkehrszeichen 12 fallende Licht 11 des Scheinwerfers 10 wird reflektiert. Durch entsprechende optische Elemente wird erreicht, dass ein wesentlicher Teil des eingestrahlten Lichtes in nahezu dieselbe Richtung zurückreflektiert wird. Insofern wird hier ein Verkehrszeichen 12 mit retroreflektierender Oberfläche betrachtet. Von wesentlichem Interesse ist derjenige Teil 14 des retroreflektierten Lichtes, der in das Gesichtsfeld des Fahrzeugführers 16 fällt. Dieses weicht um einen kleinen Winkel α von der Einstrahlrichtung 11 ab. Eine mögliche Neigung des Verkehrszeichens 12 muss bei der Bestimmung der Winkelmaße gegebenenfalls berücksichtigt werden, ist dabei in Fig. 2 nicht dargestellt.

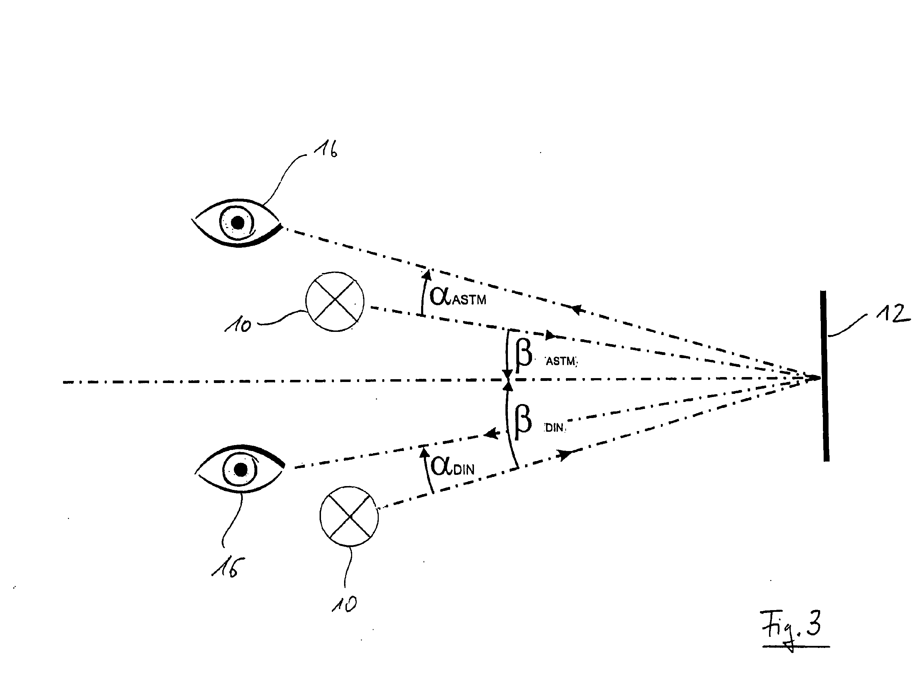

Fig. 3 zeigt unterschiedliche Geometrien, in der die Intensität des zurück reflektierten Lichtes gemessen wird, um das Erfüllen unterschiedlicher Normen zu gewährleisten. Im unteren Teil der Fig. 3 ist eine Geometrie angegeben, wie zum Beispiel für eine DIN-Norm (DIN 67520-2007) angenommen wird. Im speziellen Fall dieser Norm wird der Anleuchtwinkel β zu 5° gewählt und der Beobachtungswinkel α zu 0,33°, 0,5° und/oder 1°.

Bei der US-Norm gemäß dem Standard ASTM E 1709 wird beispielsweise ein Anleuchtwinkel β zu -4° gewählt und ein Beobachtungswinkel α zu 0,2° und/oder 0,5°. Die gezeigte Geometrie für die genannte US-Norm kann zum Beispiel durch eine entsprechende Neigung des Verkehrszeichens 12 erreicht werden.

Diese Geometrien werden bei der Messung der Retroreflektivität verwendet um zu prüfen, ob zum Beispiel die genannten Normen erfüllt werden oder nicht.

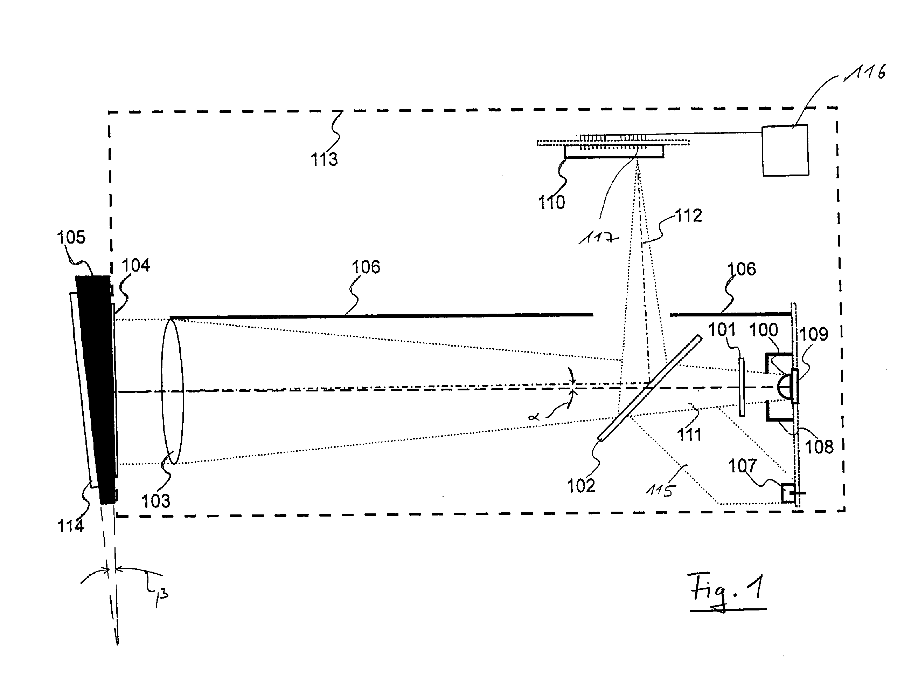

Fig. 1 zeigt in schematischer Darstellung eine Ausführungsform eines Messgerätes, anhand derer eine Ausgestaltung des erfindungsgemäßen Verfahrens geschildert wird.

In einem Gehäuse 113 befindet sich der Messaufbau. Er umfasst eine Leuchtdiode 100, die auf einem Peltier-Element 109 zur Temperierung angeordnet sein kann. Ein Licht 111 dieser Leuchtdiode 100 wird durch eine Blende 108 und ein Filter 101 in Richtung eines Frontfensters 104 gesendet. Es passiert dabei bei dieser Ausführungsform einen teildurchlässigen Spiegel 102 und eine Sammellinse 103. Ein Teil 115 des Lichtes 111 wird an dem teildurchlässigen Spiegel 102 reflektiert und fällt bei dieser Ausführungsform auf ein Referenzmesselement 107, aus dessen Signal die Beleuchtungsstärke bestimmt werden kann.

Während der Messung ist vor dem Frontfenster 104 die Folie 114 angeordnet, deren Retroreflektivität bestimmt werden soll. Die Folie 114 entspricht der Oberfläche eines retroreflektierenden Verkehrsschildes.

Bezugsziffer 105 bezeichnet einen sogenannten β-Adapter, mit dem ein Anleuchtwinkel auf die Folie 114 festgelegt werden kann. Somit kann durch geeignete Auswahl der Winkelgröße und -ausrichtung des β-Adapters 105 der Anleuchtwinkel β ausgewählt werden. Der β-Adapter 105 kann zum Beispiel ein Tubus sein, dessen Stirnseiten entsprechend den gewünschten Anleuchtwinkeln angeschrägt sind. Der β-Adapter 105 kann zum Beispiel mit Magneten an dem Gehäuse 113 befestigt sein. Außerdem kann er ein Informationselement umfassen, das Informationen über den β-Adapter 105 enthält, also zum Beispiel den Wert und die Richtung des Winkels β. Diese Information kann durch geeignete Maßnahmen ausgelesen werden und von der Auswerteeinheit 116 bei der Bestimmung der Retroreflektivität mit verwendet werden. Das Informationselement kann zum Beispiel ein widerstandskodiertes Element sein, aus dessen Widerstandswert der Typ des β-Adapters erkannt werden kann.

Das von der Folie 114 zurückreflektierte Licht wird an dem teildurchlässigen Spiegel 102 reflektiert und fällt auf eine CCD-Zeile 110, die mehrere lichtempfindliche Elemente (hier CCD-Zellen) in einer Reihe aufweist, die sich entlang der Figurenebene erstreckt. Die einzelnen CCD-Zellen dieser CCD-Zeile 110 können mit einer Auswerteeinheit 116 ausgelesen werden. Abschattungselemente 106 sind vorgesehen, um das Streulicht zu mindern.

Beispielhaft ist der Weg 112 von solchem retroreflektierten Licht angegeben, der auf eine CCD-Zelle 117 fällt. Durch die Lage eines solchen ausgewählten lichtempfindlichen Elementes 117 ist der Winkel α eindeutig vorbestimmt.

Diese Ausführungsform des erfindungsgemäßen Messgerätes wird wie folgt eingesetzt. Durch die Festlegung der Temperatur der Leuchtdiode 100 mit Hilfe des Peltier-Elementes 109 wird der Arbeitspunkt der LED 100 derart festgelegt, dass das Emissionsspektrum der Leuchtdiode 100 den gewünschten Anforderungen entspricht und konstant ist. Wenn das Emissionsspektrum auch ohne Temperaturregelung gut genug ist, kann auf die Temperaturregelung verzichtet werden. Zur Festlegung eines normgerechten Wellenlängenspektrums ist der Filter 101 zwischengeschaltet. Die zu vermessende Folie 114 wird auf den β-adapter 105 gelegt, der an der Frontscheibe 104 des Messgehäuses 113 angeordnet ist.

Abhängig von dem gewünschten Winkel α, der zum Beispiel durch eine entsprechende Messnorm vorgegeben ist, wird ein bestimmtes lichtempfindliches Element 117 ausgewählt, dessen Signal von der Auswerteeinheit 116 gemessen und zur Bestimmung der Intensität des in Richtung α retroreflektierten Lichtes verwendet wird. Während des Betriebes der Leuchtdiode 100 wird also Licht 111 auf die Folie 114 gesendet, das von dort retroreflektiert wird. Nur dasjenige Licht, das auf das ausgewählte lichtempfindliche Element 117 der CCD-Zeile 110 fällt, wird von der Auswerteeinheit 116 zur Auswertung verwendet.

Das Messgerät bestimmt also keine Intensitätsverteilung des retroreflektierten Lichtes. Es wird nur die Intensität eines retroreflektierten Lichtstrahles in einem ganz definierten Punkt ausgewertet, der durch die Auswahl des lichtempfindlichen Elementes 117 bestimmt wird. Es wird also nur das retroreflektierte Licht ausgewertet, welches auf eine bestimmte CCD-Zelle 117 fällt.

So kann zum Beispiel durch Auswahl der CCD-Zelle 117 ein Winkel von α = 0,2° ausgewählt werden. Soll ein anderer Beobachtungswinkel wie zum Beispiel 0,5° ausgewählt werden, wird eine entsprechende andere Zelle ausgelesen. In der Realität ist der retroreflektierte Lichtpegel nicht 100 % auf eine einzelne CCD-Zelle gerichtet, sondern wirkt eher wie ein "Lichtklecks", der auf die CCD-Zeile 110 fällt. Für einen bestimmten Beobachtungswinkel ist aber nur die Lichtstärke auf einer ausgewählten Zelle 117 interessant.

Während der Fertigung des Messgerätes kann zum Beispiel mit Hilfe eines temporär am Gerät fixierten Punktstrahlers (zum Beispiel eines Lasers), welcher im Zentrum der Frontscheibe 104 in Richtung der LED 100 in Richtung der optischen Achse strahlt, kalibriert. Dies kann dadurch geschehen, dass diejenige CCD-Zelle mit der höchsten empfangenen Lichtstärke dieser Laserbeleuchtung ermittelt wird und die Adresse dieser CCD-Zelle als sogenannter 0°-Parameter gespeichert wird. Anschließend kann über die Größe der einzelnen CCD-Zelle und den Abstand der einzelnen CCD-Zellen jeder Zelle ein Beobachtungswinkel zugeordnet werden. Mit Hilfe einer Referenzfolie mit bekannten Retroreflexionsparametern kann eine definierte Beleuchtungsstärke der Leuchtdiode 100 mit Hilfe des Referenzempfängers 107 festgelegt werden.

Der β-Adapter 105 ist zum Beispiel mit Magneten so am Gerät angebracht, dass er auf einfache Weise gegen einen anderen β-Adapter ausgewechselt werden kann, welcher einen anderen Anleuchtwinkel β repräsentiert. In der dargestellten Ausführungsform erstreckt sich der Winkel β in der Figurenebene der Fig. 1. Es können mit geeigneten β-Adaptern aber auch Anleuchtwinkel in anderer Raumrichtung realisiert werden, wenn dies zum Beispiel zur Überprüfung einer retroreflektierenden Folie 114 entsprechend einer besonderen Norm gefordert wird.

Der Typ des β-Adapters bzw. der mit ihm verwirklichte Anleuchtwinkel wird aus dem Informationselement des β-Adapters 105 ausgelesen. Bei einem widerstandskodierten Informationselement geschieht dies durch Auswertung des Widerstandswerts.

Insofern kann der β-Adapter eine Neigung der zu vermessenden Oberfläche bezüglich des einfallenden Lichtes in unterschiedlichen Raumrichtungen bewirken. Nicht notwendigerweise befinden sich also der Anleuchtwinkel β und der Winkel α, in dessen Richtung die Retroreflektivität gemessen werden soll, in derselben Ebene. Anders ausgedrückt ist die Ebene, die von dem Anleuchtwinkel β und der Flächennormale der zu vermessenden Oberfläche aufgespannt wird, nicht notwendigerweise identisch zu derjenigen Ebene, die von dem Winkel α, in dessen Richtung die Retroreflektivität gemessen werden soll, und der Flächennormale der Oberfläche, deren Retroreflektivität gemessen werden soll, aufgespannt wird. Das erfindungsgemäße Verfahren und das erfindungsgemäße Messgerät bieten dementsprechend den Vorteil einer einfachen Anpassung zum Beispiel an Änderungen der Normen zur Bestimmung der Retroreflektivität von Verkehrszeichen. Fordert die Änderung einer Norm zum Beispiel die Vermessung unter einem anderen Winkel α, kann dies durch Auswahl der entsprechenden CCD-Zelle 117 auf einfache Weise realisiert werden, ohne dass ein Umbau des Messgerätes notwendig ist. Bei einer typischen CCD-Zeile kann zum Beispiel ein Beobachtungswinkel von 0,1° bis 2,0° in einem Raster von 0,01° ohne bauliche Anpassungen des Messgerätes vorgenommen werden. Das heißt, der Beobachtungswinkel kann in Stufen von 0,01° durch entsprechende Abfrage der jeweiligen CCD-Zelle 117 eingestellt werden.

Die Verwendung einer Leuchtdiode verringert gegenüber der Verwendung einer Glühlampe den Leistungsbedarf, bewirkt eine längere Lebensdauer und daraus resultierende längere Wartungsintervalle. Eine Leuchtdiode hat eine hohe Langzeitstabilität und gewährleistet dadurch eine konstante Messgenauigkeit.

Bei der geschilderten bevorzugten Ausführungsform wird genau ein lichtempfindliches Element 117 der CCD-Zeile 110 ausgelesen und ausgewertet. Alternativ können auch mehrere wenige nebeneinanderliegende lichtempfindliche Elemente 117 (zum Beispiel zwei oder vier) ausgewertet werden, um zum Beispiel den möglichen Ausfall eines einzelnen lichtempfindlichen Elementes zu kompensieren. Um die auszuwertenden Daten gering zu halten und die Genauigkeit möglichst hoch zu halten, ist jedoch die Auslesung von nur einem einzelnen lichtempfindlichen Element 117 von besonderem Vorteil.

### Bezugszeichenliste

- 10: Scheinwerfer
- 11: einfallendes Licht
- 12: Verkehrszeichen
- 14: reflektiertes Licht
- 16: Fahrzeugführer
- 17: Fahrzeug
- 100: Leuchtdiode
- 101: Filter
- 102: teildurchlässiger Spiegel
- 103: Sammellinse
- 104: Frontfenster
- 105: β-Adapter
- 106: Abschattungselement
- 107: Referenzlichtempfänger
- 108: Blende
- 109: Peltier-Element
- 110: CCD-Zeile
- 111: Messlicht
- 112: ausgewähltes retroreflektiertes Licht
- 113: Gehäuse
- 114: Folie, Oberflächenschicht
- 115: Referenzlicht
- 116: Auswerteeinheit
- 117: ausgewähltes CCD-Element
- α: Beobachtungswinkel
- β: Anleuchtwinkel

## Patentansprüche

1. Verfahren zur Bestimmung der Retroreflektivität einer retroreflektierenden Oberfläche, insbesondere der Oberflächenschicht (114) eines Verkehrszeichens (12), in einer vorbestimmten Richtung, bei dem
(̅a) Messlicht (111) unter Einhaltung eines vorbestimmten Anleuchtwinkels (β) in Richtung der Oberfläche (114) gesendet wird, deren Retroreflektivität gemessen werden soll,
(b) die Richtung (α) ausgewählt wird, in der die Retroreflektivität gemessen werden soll,
(c) ein Teilbereich einer Anordnung (110) aus lichtempfindlichen Elementen ausgewählt wird, der derart angeordnet ist, dass er von Licht getroffen wird, das von der Oberfläche (114) in der vorbestimmten Richtung (α) retroreflektiert wird, in der die Retroreflektivität gemessen werden soll, wobei der ausgewählte Teilbereich nicht alle lichtempfindlichen Elemente der Anordnung (110), vorzugsweise nur ein lichtempfindliches Element (117) der Anordnung (110), umfasst,
(d) nur die Signale der lichtempfindlichen Elemente des ausgewählten Teilbereiches ausgelesen werden oder nur das Signal des einen lichtempfindlichen Elementes (117) ausgelesen wird, und
(e) aus den ausgelesenen Signalen die Intensität des auf den ausgewählten Teilbereich oder aus dem ausgelesenen Signal die Intensität des auf das ausgewählte lichtempfindliche Element (117) fallenden retroreflektierten Lichtes (112) bestimmt wird.

2. Verfahren nach Anspruch 1, bei dem die Anordnung von lichtempfindlichen Elementen eindimensional ist, vorzugsweise in Form einer CCD-Zeile (110).

3. Verfahren nach einem der Ansprüche 1 oder 2, bei dem der ausgewählte Teilbereich der Anordnung (110) oder das ausgewählte lichtempfindliche Element (117) derart ausgewählt wird, dass die Richtung (α), in der die Retroreflektivität gemessen werden soll, einer Norm zur Bestimmung der Retroreflektivität von Verkehrszeichen entspricht.

4. Verfahren nach einem der Ansprüche 1 bis 3, bei dem die Oberfläche (114), deren Retroreflektivität gemessen werden soll, mit dem Licht einer LED (100) als Messlicht beleuchtet wird.

5. Verfahren nach Anspruch 4, bei dem die Betriebstemperatur der LED (100) derart festgelegt wird, dass diese ein gewünschtes Emissionsspektum aufweist.

6. Verfahren nach einem der Ansprüche 1 bis 5, bei dem ein Teil (115) des Lichtes (111), das auf die Oberfläche (114) gesendet wird, deren Retroreflektivität gemessen werden soll, abgezweigt und zur Regelung der Beleuchtungsstärke der Lichtquelle (100) eingesetzt wird, die zur Erzeugung des Messlichtes (111) verwendet wird.

7. Verfahren nach einem der Ansprüche 1 bis 6, bei dem zwischen der Oberfläche (114), deren Retroreflektivität gemessen werden soll, und einer Referenzfläche, die vorzugsweise senkrecht zum Strahlengang des Messlichtes (111) ist, eine lichtdurchlässige Winkelplatte (105) eingesetzt wird, um einen vorbestimmten Winkel (β) zwischen dem Messlicht (111) und der Oberfläche (114), deren Retroreflektivität gemessen werden soll, einzustellen.

8. Verfahren nach einem der Ansprüche 1 bis 7, bei dem mit einem Filter (101) im Strahlengang des Messlichtes (111) ein gewünschtes Normlicht eingestellt wird.

9. Messgerät zur Messung der Retroreflektivität einer retroreflektierenden Oberfläche, insbesondere der Oberflächenschicht (114) eines Verkehrszeichens (12), in einer vorbestimmten Richtung, mit
(a) einer Lichtquelle (100) zum Aussenden von Messlicht (111),
(b) einer Optik (108, 103) zur Lenkung des Messlichtes (111) auf die Oberfläche (114), deren Retroreflektivität gemessen werden soll,
(c) einer Anordnung (110) von lichtempfindlichen Elementen im Strahlengang des reflektierten Messlichtes, und
(d 1 ) einer Auswerteeinheit (116)
- zum Auswählen eines Teilbereiches der Anordnung (110) von lichtempfindlichen Elementen, der derart angeordnet ist, dass er von Licht getroffen wird, das in der vorbestimmten Richtung (α) retroreflektiert wird, und der nicht alle lichtempfindlichen Elemente der Anordnung (110) umfasst, und
- zum Auslesen nur der Signale der lichtempfindlichen Elemente des ausgewählten Teilbereiches und
- zur Bestimmung der Intensität des auf den ausgewählten Teilbereich fallenden retroreflektierten Lichtes aus den Signalen der lichtempfindlichen Elemente des ausgewählten Teilbereiches,
(d2) vorzugsweise einer Auswerteeinheit (116)
- zum Auswählen eines lichtempfindlichen Elementes der Anordnung (110), das derart angeordnet ist, dass es von Licht getroffen wird, das in der vorbestimmten Richtung (α) retroreflektiert wird, und
- zum Auslesen nur des Signals des ausgewählten lichtempfindlichen Elementes (117), und
- zur Bestimmung der Intensität des auf das ausgewählte lichtempfindliche Element (117) fallenden retroreflektierten Lichtes (112) aus dem Signal des ausgewählten lichtempfindlichen Elementes (117).

10. Messgerät nach Anspruch 9, bei dem die Anordnung von lichtempfindlichen Elementen eindimensional ist, vorzugsweise eine CCD-Zeile (110) umfasst.

11. Messgerät nach einem der Ansprüche 9 oder 10, bei dem die Ausdehnung der Anordnung (110) lichtempfindlicher Elemente derart ist, dass sie einem Winkelbereich des reflektierten Lichtes von wenigstens 2 Winkelgrad entspricht.

12. Messgerät nach einem der Ansprüche 9 bis 11, bei dem die Lichtquelle eine LED (100) umfasst.

13. Messgerät nach Anspruch 12, mit einer Temperiervorrichtung für die LED (100), vorzugsweise einem Peltierelement (109).

14. Messgerät nach einem der Ansprüche 9 bis 13, mit
- einem teildurchlässigen Spiegel (102) im Strahlengang des auf die Oberfläche (114) fallenden Lichtes (111), deren Retroreflektivität gemessen werden soll, und
- einem Referenzlichtempfänger (107) im Strahlengang desjenigen Lichtes (115), das ausgehend von dem teildurchlässigen Spiegel (102) nicht auf die Oberfläche (114) fällt, deren Retroreflektivität gemessen werden soll.

15. Messgerät nach einem der Ansprüche 9 bis 14, mit einem Filter (101) im Strahlengang des Messlichtes (111) zur Einstellung eines gewünschten Normlichtes.
